# EUROPÄISCHE PATENTANMELDUNG

(11) **EP 2 799 395 A1**
(43) Veröffentlichungstag der Anmeldung: **05.11.2014**
(21) Anmeldenummer: 13004375.5
(22) Anmeldetag: 06.09.2013
(51) Int. Cl.: C01B 3/38

(54) **Verfahren zum Betreiben eines Dampfreformers und Dampfreformer**

(30) Priorität: 30.04.2013 DE 102013007437
(71) Anmelder: Linde Aktiengesellschaft, 80331 München (DE)
(72) Erfinder: Lang, Martin, 80689 München (DE); Schwarzhuber, Josef, 85283 Wolnzach (DE); Rhys Graville, Stephen, 276160 Singapore (SG); Helmle, Maximilian, 80339 München (DE)
(74) Vertreter: Fischer, Werner

(57) **Zusammenfassung**

Die Erfindung betrifft einen Dampfreformer (R) sowie ein Verfahren zu dessen Betrieb, wobei ein Feuerraum (S) über eine Verbrennungseinrichtung (B) beheizt und dem dabei erzeugten Rauchgas (12) in einem Abhitzesystem (A) Wärme entzogen wird (E1, E2, E3, E4), wobei für den Betrieb der Verbrennungseinrichtung (B) ein organische Schwefelkomponenten enthaltender Brennstoff (1) aus einer Brennstoffquelle (Q) entnommen wird. Die Erfindung ist dadurch gekennzeichnet, dass im Normalbetrieb des Dampfreformers (R) der schwefelhaltige Brennstoff (1) vor seinem Einsatz in der Verbrennungseinrichtung (B) nach Zumischung von Wasserstoff (14) hydriert und nachfolgend entschwefelt wird (D).

## Beschreibung

Die Erfindung betrifft ein Verfahren zum Betreiben eines Dampfreformers, bei dem ein Feuerraum über eine Verbrennungseinrichtung beheizt und dem dabei erzeugten Rauchgas in einem Abhitzesystem Wärme entzogen wird, wobei für den Betrieb der Verbrennungseinrichtung ein organische Schwefelkomponenten enthaltender Brennstoff aus einer Brennstoffquelle entnommen wird.

Weiterhin betrifft die Erfindung einen Dampfreformer zur Durchführung des erfindungsgemäßen Verfahrens.

Dampfreformer sind seit langem Stand der Technik und dem Fachmann bekannt. Sie werden beispielsweise dazu eingesetzt, um in industriellem Maßstab aus kohlenwasserstoffhaltigen Einsätzen Wasserstoff und/oder Kohlenmonoxid zu gewinnen. Die kohlenwasserstoffhaltigen Einsätze, bei denen es sich z. B. um Erdgas, Naphtha, Raffinerieabgase oder Flüssiggas (LPG) handelt, werden dabei zunächst entschwefelt und anschließend mit Wasserdampf oder Kohlendioxid vermischt, bevor sie durch Katalysatorrohre geleitet werden, wobei sie in einer endothermen Reaktion in ein Wasserstoff und Kohlenmonoxid enthaltendes Gasgemisch umgesetzt werden. Die für die Reaktion erforderliche Energie wird gewöhnlich über eine Verbrennungseinrichtung bereitgestellt, die einen oder mehrere Brenner umfasst, die ihr heißes Rauchgas in einen Feuerraum entlassen, in dem die Katalysatorrohre angeordnet sind. Das Rauchgas wird im Feuerraum lediglich bis auf Temperaturen von ca. 1000-1100°C abgekühlt, so dass es beim Verlassen des Feuerraums immer noch einen erheblichen Anteil der bei der Verbrennung freigesetzten Wärme enthält. Um diese Wärme zu nutzen, wird das Rauchgas durch ein Abhitzesystem geführt, in dem es beispielsweise gegen anzuwärmende Einsatzstoffe oder bei der Produktion von Exportdampf abgekühlt wird.

Die Verbrennungseinrichtung wird gewöhnlich mit Restgasen aus der Wasserstoff- bzw. Kohlenmonoxidproduktion betrieben, denen von außerhalb des Prozesses zugeführte Brennstoffe zugemischt werden. Diese externen Brennstoffe enthalten häufig organische Schwefelverbindungen wie Mercaptane, Thiophene oder Carbonylsulfid, die bei der Verbrennung Schwefeldioxid bilden. Ein Teil des Schwefeldioxids wird bei der Abkühlung des Rauchgases weiter zu Schwefeltrioxid oxidiert, das mit Wasser zu Schwefelsäure reagiert, die auskondensiert, wenn bei der Abkühlung des Rauchgases der Schwefelsäuretaupunkt unterschritten wird. Bei einer deutlich unterhalb des Schwefelsäuretaupunkts liegenden Temperatur kondensiert darüber hinaus auch Schweflige Säure aus, die aus Schwefeldioxid gebildet wird. Da Schwefelsäure im Abhitzesystem zu Ablagerungen und erheblichen Korrosionsproblemen führen würde, erfolgt nach dem Stand der Technik die Abkühlung des Rauchgases lediglich bis zu einer oberhalb des Schwefelsäuretaupunktes liegenden Minimaltemperatur, die sich normalerweise in einem Bereich zwischen 120 und 170°C befindet, so dass ein erheblicher Teil der im Rauchgas enthaltenen Wärme ungenutzt bleibt. Alternativ kann das Abhitzesystem mit korrosionsbeständigen Stählen oder säurebeständigen Auskleidungen ausgeführt werden, wodurch zwar eine Rauchgasabkühlung bis unterhalb des Schwefelsäuretaupunktes möglich ist, die Investitionskosten für den Dampfreformer aber erheblich ansteigen.

Aufgabe der vorliegenden Erfindung ist es daher, ein Verfahren der eingangs beschriebenen Art sowie eine Vorrichtung zu dessen Durchführung anzugeben, die es erlauben, die beschriebenen Nachteile des Standes der Technik zu überwinden.

Diese Aufgabe wird verfahrensseitig erfindungsgemäß dadurch gelöst, dass im Normalbetrieb des Dampfreformers der schwefelhaltige Brennstoff vor seinem Einsatz in der Verbrennungseinrichtung nach Zumischung von Wasserstoff hydriert und nachfolgend entschwefelt wird.

Unter der Hydrierung des Brennstoffs ist hierbei zu verstehen, dass die im Brennstoff enthaltenen organischen Schwefelverbindungen hydriert werden, wobei Schwefelwasserstoff entsteht. Durch die nachfolgende Entfernung von Schwefelwasserstoff wird der Brennstoff entschwefelt.

Durch das erfindungsgemäße Verfahren ist es möglich, ein Rauchgas zu erzeugen, das keinen oder zumindest nur einen sehr geringen Gehalt an Schwefeloxiden (SO₂/SO₃) aufweist. Da der Schwefelsäuretaupunkt mit der Schwefeltrioxidkonzentration abnimmt, kann das Rauchgas bis zu weit tieferen Minimaltemperaturen abgekühlt werden, als dies nach dem Stand der Technik möglich ist, ohne dass es zur Bildung von Schwefelsäure kommt. Bei der Anwendung gängiger Entschwefelungsverfahren kann der Schwefelgehalt des Brenngases bereits soweit abgesenkt werden, dass der Schwefelsäuretaupunkt des Rauchgases unterhalb des Wassertaupunktes liegt. Das Verfahren erlaubt es daher, die in den Rauchgasen enthaltene Wärme weit effektiver als im Stand der Technik zu nutzen, ohne dass es erforderlich ist, das Abhitzesystem mit teuren korrosionsbeständigen Stählen oder säurebeständigen Auskleidungen auszuführen. Vorzugsweise erfolgt die Abkühlung des Rauchgases auf die Minimaltemperatur gegen vorzuwärmende bzw. aufzuheizende Verbrennungsluft und/oder Einsatzstoffe für die Dampfreformierung, wie beispielsweise gegen einen kohlenwasserstoffhaltigen Strom, der nachfolgend in den Katalysatorrohren des Dampfreformers umgesetzt wird, und/oder Brennstoff, der anschließend zur Beheizung des Feuerraums des Dampfreformers verwendet wird, und/oder bei der Erzeugung von Dampf auf unterschiedlichen Druckniveaus aus entmineralisiertem Wasser (Demin-Wasser) bzw. Kesselspeisewasser und/oder gegen zu überhitzenden Dampf.

In einer bevorzugten Ausgestaltung des erfindungsgemäßen Verfahrens erfolgt die Abkühlung des Rauchgases auf die Minimaltemperatur in mehreren Abkühlschritten, wobei in einem ersten Schritt Hochdruckdampf erzeugt, in einem zweiten, auf den ersten folgenden Schritt Kesselspeisewasser vorgewärmt oder Niederdruckdampf erzeugt und in einem dritten, dem zweiten nachfolgenden Schritt kalte Verbrennungsluft vorgewärmt wird. Diesen Abkühlschritten gehen weitere voran, in denen vorzugsweise dem Rauchgas nacheinander gegen einen Einsatzstoff für die Dampfreformierung, bei der Überhitzung von Dampf sowie gegen vorgewärmte Verbrennungsluft Wärme entzogen wird. Das erfindungsgemäße Verfahren weiterbildend wird vorgeschlagen, das Rauchgas nach Abkühlung gegen kalte Verbrennungsluft weiter gegen vorzuwärmendes Demin-Wasser abzukühlen oder ihm gegen vorzuwärmenden Brennstoff und/oder einen vorzuwärmenden Einsatzstoff für die Dampfreformierung Wärme zu entziehen, wobei dieser Abkühlschritt bzw. diese Abkühlschritte nach der bei der Erzeugung von Hochdruckdampf erfolgten Abkühlung durchgeführt werden.

Für die Hydrierung und Entschwefelung des schwefelhaltigen Brennstoffs sowie die verstärkte Wärmenutzung des Rauchgases fallen erhebliche Kosten an. Nicht zuletzt trägt hierzu der benötigte Hydrierwasserstoff bei, der entweder teuer importiert werden muss oder der zwar innerhalb des Prozesses erzeugt wird, dann aber nicht als Produkt gegen Gutschrift abgegeben werden kann; allenfalls die thermische Nutzung von überschüssigem Hydrierwasserstoff ist möglich. Überraschend hat sich jedoch herausgestellt, dass diese Kosten durch die aufgrund der Erfindung mögliche bessere Ausnutzung des Wärmeinhalts des Rauchgases mehr als kompensiert werden können.

Der schwefelhaltige Brennstoff kann gemeinsam mit einem kohlenwasserstoffhaltigen Einsatz hydriert und entschwefelt werden, der nachfolgend in den Katalysatorrohren des Dampfreformers in ein Wasserstoff und Kohlenmonoxid enthaltendes Gasgemisch umgesetzt wird. Hierzu wird ein Schwefel und Kohlenwasserstoff enthaltender Stoffstrom, der entweder genau aus einer Kohlenwasserstoffquelle stammt oder der aus mehreren, unterschiedlichen Kohlenwasserstoffquellen entnommenen Stoffströmen gebildet wird, in eine Entschwefelungseinrichtung eingeleitet, um dort hydriert und entschwefelt zu werden. Nachfolgend wird der entschwefelte Stoffstrom in wenigstens zwei Teilströme zerlegt, von denen einer der Verbrennungseinrichtung als Brennstoff zugeführt wird.

Alternativ kann der schwefelhaltige Brennstoff auch in einer eigenen Entschwefelungseinrichtung unabhängig von dem Einsatz für die Dampfreformierung entschwefelt werden. Das ist insbesondere dann sinnvoll, wenn der Brennstoff Bestandteile enthält, die nicht für die Dampfreformierung geeignet sind oder wenn er mit zu geringem Druck vorliegt, um wirtschaftlich dem Einsatz für die Dampfreformierung zugemischt werden zu können.

Abhängig von der Art des Brennstoffs und der Schwefelkomponenten sowie deren Konzentration erfolgt die Entschwefelung in einem oder mehreren aufeinander folgenden katalytischen Schritten. Vorzugsweise werden die Schwefelkomponenten hierbei bis zu einer Konzentration entfernt, die dazu führt, dass im erzeugten Rauchgas der Schwefelsäuretaupunkt unterhalb des Wassertaupunkts liegt.

Falls der schwefelhaltige Brennstoff nicht entschwefelt werden kann, wie dies beispielsweise während des Anfahrbetriebs des Dampfreformers oder bei einem störungsbedingten Ausfall der Entschwefelungseinrichtung geschehen kann, ist vorgesehen, die Verbrennungseinrichtung mit schwefelhaltigem Brennstoff zu betreiben.

Um einen möglichst hohen Anteil der im Rauchgas enthaltenen Wärme zu nutzen, wird angestrebt, durch Wärmeintegration der über das Rauchgas anzuwärmenden Ströme das durch Verbrennung des entschwefelten Brennstoffs erzeugte Rauchgas bis auf eine Minimaltemperatur abzukühlen, die nahe oberhalb des Wasser- bzw. des Schwefelsäuretaupunkts liegt. Zweckmäßigerweise wird dazu eine Regeleinrichtung eingesetzt, die die Minimaltemperatur stets einem Sollwert annähert, der einsatz- und anlagenabhängig vorgegeben wird.

Weiterhin betrifft die Erfindung einen Dampfreformer mit einem Feuerraum und einer Verbrennungseinrichtung zur Beheizung des Feuerraums sowie einem Abhitzesystem, in dem Wärme aus dem über die Verbrennungseinrichtung erzeugten Rauchgas entnommen werden kann.

Seitens des Dampfreformers wird die gestellte Aufgabe erfindungsgemäß dadurch gelöst, dass er eine mit einer Brennstoffquelle sowie mit der Verbrennungseinrichtung verbindbare Entschwefelungseinrichtung umfasst, in der ein organische Schwefelverbindungen aufweisender, aus der Brennstoffquelle entnommener Brennstoff nach Zuführung von Wasserstoff hydriert und nachfolgend entschwefelt werden kann, bevor er zum Betrieb der Verbrennungseinrichtung eingesetzt wird.

Die Entschwefelungseinrichtung kann für die ausschließliche Entschwefelung von schwefelhaltigem Brennstoff ausgeführt sein. Möglich ist jedoch auch, dass sie für eine gemeinsame Entschwefelung von schwefelhaltigem Brennstoff sowie eines schwefelhaltigen Kohlenwasserstoffstroms ausgelegt ist, der entschwefelt der Dampfreformierung als Einsatz zugeführt wird. Zweckmäßigerweise ist dann die Entschwefelungseinrichtung mit dem Dampfreformer derart verbunden, dass ein Teil des entschwefelten Stoffstroms den Katalysatorrohren des Dampfreformers als Einsatz zugeführt werden kann.

Während des Anfahrens des Dampfreformers oder wenn im Falle von Störungen die Entschwefelungseinrichtung nicht nutzbar ist, kann es sinnvoll sein, die Verbrennungseinrichtung mit schwefelhaltigem Brennstoff zu betreiben. Bevorzugt ist der Dampfreformer daher so ausgeführt, dass die Verbrennungseinrichtung unter Umgehung der Entschwefelungseinrichtung direkt mit der Brennstoffquelle verbindbar ist, so dass schwefelhaltiger Brennstoff zum Betrieb der Verbrennungseinrichtung eingesetzt werden kann.

Um eine intensive Nutzung des Wärmeinhalts des Rauchgases zu realisieren, umfasst das Abhitzesystem des Dampfreformers Wärmetauscher zur Vorwärmung bzw. Aufheizung von Verbrennungsluft und/oder Einsatzstoffen für die Dampfreformierung, wie beispielsweise eines kohlenwasserstoffhaltigen Stroms, der nachfolgend in den Katalysatorrohren des Dampfreformers umgesetzt wird, und/oder Brennstoff, der anschließend zur Beheizung des Feuerraums des Dampfreformers verwendet wird, und/oder zur Erzeugung von Dampf auf unterschiedlichen Druckniveaus aus Demin-Wasser bzw. Kesselspeisewasser und/oder zur Überhitzung von Dampf.

Eine bevorzugte Ausgestaltung des erfindungsgemäßen Dampfreformers sieht vor, dass im Abhitzesystem ein Wärmetauscher zur Erzeugung von Hochdruckdampf angeordnet ist, dem in Strömungsrichtung des Rauchgases zunächst ein Wärmetauscher zur Vorwärmung von Kesselspeisewasser oder zur Erzeugung von Niederdruckdampf und anschließend ein Wärmetauscher zur Vorwärmung kalter Verbrennungsluft folgen, wobei stromaufwärts dieser drei Wärmetauscher vorzugsweise ein vierter Wärmetauscher zur Vorwärmung eines Einsatzstoffs für die Dampfreformierung, ein fünfter Wärmetauscher zur Überhitzung von Dampf sowie ein sechster Wärmetauscher zur Anwärmung vorgewärmter Verbrennungsluft in Reihe angeordnet sind. Zweckmäßigerweise ist dem Wärmetauscher zur Vorwärmung kalter Verbrennungsluft ein Wärmetauscher zur Vorwärmung von Demin-Wasser nachgeschaltet oder es ist stromabwärts des Wärmetauschers zur Erzeugung von Hochdruckdampf ein Wärmetauscher zur Vorwärmung von Brennstoff und/oder ein Wärmetauscher zur Vorwärmung eines Einsatzstoffs für die Dampfreformierung angeordnet.

Vorzugsweise umfasst der erfindungsgemäße Dampfreformer eine Regelungseinrichtung, mit deren Hilfe die Minimaltemperatur des Rauchgases stets auf einen Wert eingestellt wird, bei dem ein Unterschreiten des Wassertaupunkts bzw. ein Auskondensieren von Schwefelsäure sicher vermieden wird.

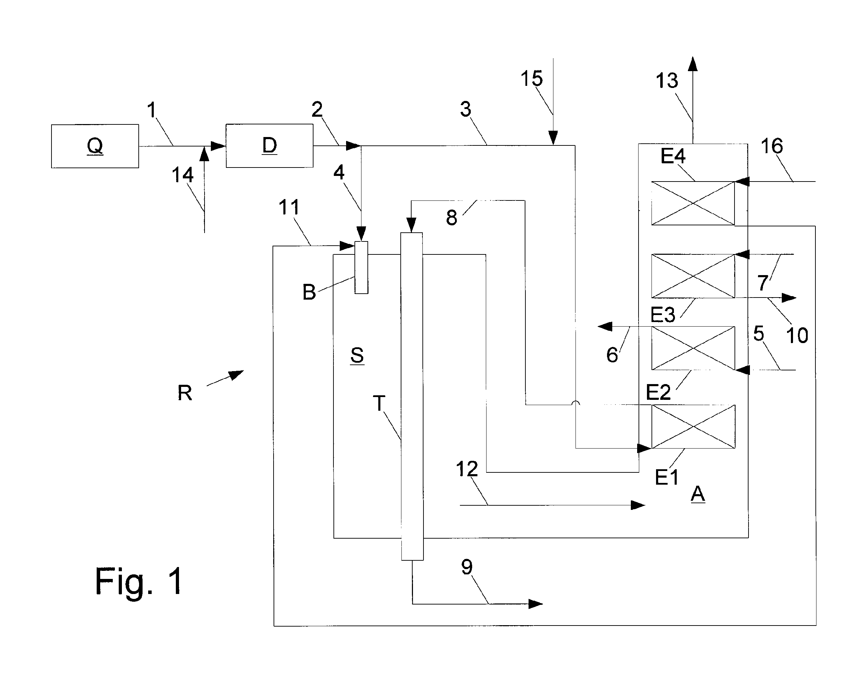

Im Folgenden soll die Erfindung anhand eines in der Figur 1 schematisch dargestellten Ausführungsbeispiels näher erläutert werden.

Die Figur 1 zeigt einen Dampfreformer mit einer Verbrennungseinrichtung, die mit entschwefeltem Brennstoff betrieben wird.

Der Dampfreformer R weist eine Strahlungszone S - den eigentlichen Feuerraum - und einer Abhitzestrecke A auf. Über Leitung 1 wird ein Schwefel und Kohlenwasserstoffe enthaltender Stoffstrom, wie beispielsweise Erdgas, der Brennstoffquelle Q entnommen und unter Zugabe von Hydrierwasserstoff 14 der Entschwefelungseinrichtung D zugeleitet, in der Schwefel katalytisch entfernt wird. Aus der Entschwefelungseinrichtung D kann daher ein Kohlenwasserstoffe enthaltender Stoffstrom 2 praktisch schwefelfrei abgezogen und nachfolgend in einen ersten 3 und einen zweiten Teilstrom 4 aufgeteilt werden. Der erste Teilstrom wird nach der Zugabe von Prozessdampf und/oder Kohlendioxid 15 dem in der Abhitzestrecke A angeordneten Wärmetauscher E1 zugeführt, dort vorgewärmt und nachfolgend in ein in der Strahlungszone S angeordnetes Katalysatorrohr T eingeleitet. Auf seinem Weg durch das mit Katalysatormaterial befüllte und von außen beheizte Katalysatorrohr T wird der Stoffstrom 8 in ein Wasserstoff und Kohlenmonoxid enthaltendes sog. Syntheserohgas umgesetzt, das über Leitung 9 abgezogen und einer weiteren Verarbeitung (nicht dargestellt) zugeleitet wird. In dem ebenfalls in der Abhitzestrecke A angeordneten Wärmetauscher E3 wird Kesselspeisewasser 7 vorgewärmt, das anschließend über Leitung 10 in eine Dampftrommel (nicht dargestellt) geleitet wird, aus der vorgewärmtes Kesselspeisewasser 5 entnommen und im Wärmetauscher E2 zu Hochdruckdampf 6 für den Prozess und/oder den Export umgesetzt wird.

Der zweite Teilstrom 4 des schwefelfreien, Kohlenwasserstoffe enthaltenden Stoffstroms 2 wird als Brennstoff dem Brenner B zugeführt, über den er mit einem Oxidationsmittel 11, bei dem es sich beispielsweise um im Wärmetauscher E4 vorgewärmte Luft 16 handelt, gemischt und verbrannt wird. Das bei der Verbrennung erzeugte heiße Rauchgas gibt zunächst in der Strahlungszone S einen Teil seiner thermischen Energie für die Umsetzung der durch das Katalysatorrohr T strömenden Stoffe ab. Das hierbei abgekühlte Rauchgas 12 wird in die Abhitzestrecke A weitergeleitet, wo es durch die in den Wärmetauschern E1, E2, E3 und E4 geführten Stoffströme weiter abgekühlt wird. Diese Abkühlung kann bis zu sehr niedrigen Temperaturen erfolgen, da aufgrund der Schwefelfreiheit des Brennstoffs 10 auch das Rauchgas 12 schwefelfrei ist, und Schwefelsäure bzw. Schweflige Säure nicht oder erst bei sehr tiefen Temperaturen auskondensieren und zu Schäden insbesondere an den in der Abhitzestrecke A angeordneten metallischen Einbauten führen können. Über Leitung 13 verlässt das auf eine Minimaltemperatur abgekühlte Rauchgas schließlich den Dampfreformer R.

## Patentansprüche

1. Verfahren zum Betreiben eines Dampfreformers (R), bei dem ein Feuerraum (S) über eine Verbrennungseinrichtung (B) beheizt und dem dabei erzeugten Rauchgas (12) in einem Abhitzesystem (A) Wärme entzogen wird (E1, E2, E3, E4), wobei für den Betrieb der Verbrennungseinrichtung (B) ein organische Schwefelkomponenten enthaltender Brennstoff (1) aus einer Brennstoffquelle (Q) entnommen wird, **dadurch gekennzeichnet, dass** im Normalbetrieb des Dampfreformers (R) der schwefelhaltige Brennstoff (1) vor seinem Einsatz in der Verbrennungseinrichtung (B) nach Zumischung von Wasserstoff (14) hydriert und nachfolgend entschwefelt wird (D).

2. Verfahren nach Anspruch 1, **dadurch gekennzeichnet, dass** der schwefelhaltige Brennstoff (1) gemeinsam mit einem kohlenwasserstoffhaltigen Einsatz für den Dampfreformer (R) oder alleine entschwefelt wird.

3. Verfahren nach einem der Ansprüche 1 oder 2, **dadurch gekennzeichnet, dass** die Entschwefelung des schwefelhaltigen Brennstoffs (1) in einem oder mehreren katalytischen Schritten durchgeführt wird.

4. Verfahren nach einem der Ansprüche 1 bis 3, **dadurch gekennzeichnet, dass** das Rauchgas (12) im Abhitzesystem (A) zunächst bei der Erzeugung von Hochdruckdampf (5), nachfolgend bei der Vorwärmung von Kesselspeisewasser (7) oder der Erzeugung von Niederdruckdampf und anschließend bei der Vorwärmung kalter Verbrennungsluft (16) abgekühlt wird, nachdem ihm vorzugsweise in vorangehenden, aufeinander folgenden Abkühlschritten gegen einen Einsatzstoff für die Dampfreformierung (3), bei der Überhitzung von Dampf sowie gegen vorgewärmte Verbrennungsluft bereits Wärme entzogen wurde.

5. Verfahren nach Anspruch 4, **dadurch gekennzeichnet, dass** das Rauchgas (12) nach Abkühlung gegen kalte Verbrennungsluft (16) gegen vorzuwärmendes Demin-Wasser weiter abgekühlt wird oder dass dem Rauchgas gegen vorzuwärmenden Brennstoff und/oder einen anzuwärmenden Einsatzstoff für die Dampfreformierung Wärme entzogen wird, wobei dieser Abkühlschritt bzw. diese Abkühlschritte nach der bei der Erzeugung von Hochdruckdampf (5) erfolgten Abkühlung durchgeführt werden.

6. Dampfreformer (R) mit einem Feuerraum (S) und einer Verbrennungseinrichtung (B) zur Beheizung des Feuerraums (S) sowie einem Abhitzesystem (A), in dem Wärme aus über die Verbrennungseinrichtung (B) erzeugten Rauchgasen (12) entnommen werden kann (E1, E2, E3, E4), **dadurch gekennzeichnet, dass** er eine mit einer Brennstoffquelle (Q) sowie mit der Verbrennungseinrichtung (B) verbindbare Entschwefelungseinrichtung (D) umfasst, in der ein organische Schwefelverbindungen aufweisender, aus der Brennstoffquelle (Q) entnommener Brennstoff (1) nach Zuführung von Wasserstoff (14) hydriert und nachfolgend entschwefelt werden kann, bevor er zum Betrieb der Verbrennungseinrichtung (B) eingesetzt wird.

7. Dampfreformer nach Anspruch 6, **dadurch gekennzeichnet, dass** die Entschwefelungseinrichtung (D) mit einem Katalysatorrohr (T) des Dampfreformers (R) derart verbindbar ist, dass ein Teil (4, 10) des entschwefelten Stoffstroms (2) dem Katalysatorrohr (T) als Einsatz zugeführt werden kann.

8. Dampfreformer nach einem der Ansprüche 6 oder 7, **dadurch gekennzeichnet, dass** die Verbrennungseinrichtung (B) unter Umgehung der Entschwefelungseinrichtung (D) direkt mit der Brennstoffquelle (Q) verbindbar ist, so dass schwefelhaltiger Brennstoff zum Betrieb der Verbrennungseinrichtung (B) eingesetzt werden kann.

9. Dampfreformer nach einem der Ansprüche 6 bis 8, **dadurch gekennzeichnet, dass** im Abhitzesystem (A) ein Wärmetauscher zur Erzeugung von Hochdruckdampf (E2) angeordnet ist, dem in Strömungsrichtung des Rauchgases (12) zunächst ein Wärmetauscher zur Vorwärmung von Kesselspeisewasser (E3) oder zur Erzeugung von Niederdruckdampf und anschließend ein Wärmetauscher zur Vorwärmung kalter Verbrennungsluft (E4) folgen, wobei stromaufwärts dieser drei Wärmetauscher vorzugsweise ein vierter Wärmetauscher zur Vorwärmung eines Einsatzstoffs für die Dampfreformierung (E1), ein fünfter Wärmetauscher zur Überhitzung von Dampf sowie ein sechster Wärmetauscher zur Anwärmung vorgewärmter Verbrennungsluft in Reihe angeordnet sind.

10. Dampfreformer nach Anspruch 9, **dadurch gekennzeichnet, dass** dem Wärmetauscher zur Vorwärmung kalter Verbrennungsluft (E4) ein Wärmetauscher zur Vorwärmung von Demin-Wasser nachgeschaltet ist oder dass stromabwärts des Wärmetauschers zur Erzeugung von Hochdruckdampf (E2) ein Wärmetauscher zur Vorwärmung von Brennstoff und/oder ein Wärmetauscher zur Anwärmung eines Einsatzstoffs für die Dampfreformierung angeordnet ist.
